# FASCICULE DE BREVET EUROPEEN

(11) **EP 3 292 315 B1**
(45) Date de publication et mention de la délivrance du brevet: **12.06.2019**
(21) Numéro de dépôt: 16719313.5
(22) Date de dépôt: 15.04.2016
(51) Int. Cl.: F16D 1/10, H02K 5/173

(54) **ENSEMBLE ELECTROMECANIQUE COMPORTANT UNE MACHINE ELECTRIQUE COUPLEE A UN REDUCTEUR**
ELEKTROMECHANISCHE BAUGRUPPE MIT EINER AN EINEN REDUKTOR GEKOPPELTEN ELEKTRISCHEN MASCHINE
ELECTROMECHANICAL ASSEMBLY COMPRISING AN ELECTRICAL MACHINE COUPLED TO A REDUCER

(30) Priorité: 05.05.2015 FR 1554040
(43) Date de publication de la demande: 14.03.2018
(73) Titulaire: Moteurs Leroy-Somer, 16915 Angouleme Cedex 9 (FR)
(72) Inventeur: CALMETTES, Didier, 16400 Puymoyen (FR); KOECHLIN, Samuel, 16000 Angouleme (FR)
(74) Mandataire: Nony
(86) Numéro de dépôt international: PCT/EP2016/058354
(87) Numéro de publication internationale: WO 2016/177549

(56) Documents cités:
- DE-U1- 20 215 010
- US-A- 3 508 418
- US-A1- 2007 273 229

## Description

La présente invention concerne les ensembles électromécaniques comportant une machine électrique et un réducteur, et plus particulièrement mais non exclusivement ceux dans lesquels la machine électrique est un moteur, notamment un moteur de traction automobile.

Il est connu d'assembler un moteur électrique et un réducteur au moyen d'une liaison cannelée, l'un des arbres étant un arbre mâle et l'autre un arbre femelle, lequel est typiquement un arbre ayant une partie d'extrémité creuse dans laquelle est frettée une douille. Afin de permettre l'assemblage des arbres, un jeu doit exister au niveau des cannelures, qui est source d'usure et de bruit. Le moteur peut ne comporter qu'un seul roulement à l'arrière, l'arbre du moteur étant guidé à l'avant par l'arbre du réducteur, lequel peut être supporté par deux roulements.

Typiquement, les cannelures de l'arbre mâle sont taillées directement dans celui-ci, tandis que celles de l'arbre femelle sont usinées dans la douille.

Il est connu d'ajouter une portée de centrage entre l'arbre mâle et l'arbre femelle en avant des cannelures, pour réduire la tendance des cannelures à se désaligner en fonctionnement sous l'effet de la force radiale liée aux forces magnétiques de la machine électrique et à générer une usure par corrosion de contact.

Le jeu classiquement présent pour le montage des arbres au niveau de la portée de centrage est de l'ordre de 5 à 35 microns, ce qui permet un déplacement angulaire de désalignement de l'ordre de 0,06° à 0,4°. Ce déplacement entraîne une usure des cannelures, qui constitue une source de bruit et d'usure impactant négativement la durée de vie de l'ensemble.

Afin d'amortir le déplacement entre les arbres mâle et femelle il est connu par les publications US 3 686 895 et CN 102644636 d'interposer radialement des éléments amortisseurs tels que des joints toriques au niveau des cannelures, ou au niveau de la portée cylindrique.

DE 202 15 010 U1 divulgue un ensemble électromécanique comportant une machine électrique couplée à un vilebrequin de moteur à combustion interne, l'un de la machine électrique comportant un arbre mâle et l'autre un arbre femelle dans lequel l'arbre mâle est engagé, la transmission du couple entre les deux étant assurée par coopération de formes, l'arbre de la machine électrique étant supporté à l'arrière par un roulement.

Il existe un besoin pour perfectionner encore les ensembles électromécaniques comportant un moteur et un réducteur accouplé au moteur afin notamment de réduire le bruit et l'usure en fonctionnement.

L'invention vise à répondre à ce besoin et a pour objet un ensemble électromécanique comportant une machine électrique couplée à un réducteur, l'un de la machine électrique et du réducteur comportant un arbre mâle et l'autre un arbre femelle dans lequel l'arbre mâle est inséré, la transmission du couple entre les deux étant assurée par coopération de formes, l'arbre de la machine électrique étant supporté à l'arrière par un roulement, un élément amortisseur élastiquement déformable étant disposé à l'intérieur de l'arbre femelle pour exercer un effort axial sur la portion d'arbre mâle engagée dans l'arbre femelle, tendant à charger axialement ledit roulement arrière.

L'invention permet, en chargeant axialement le roulement arrière du moteur, c'est-à-dire en mettant celui-ci en précontrainte axiale, de limiter son usure et le bruit généré. Ceci est particulièrement avantageux lorsque ce roulement arrière est un roulement à billes.

De préférence, la transmission du couple est assurée par des cannelures coopérantes formées sur les arbres mâle et femelle.

De préférence, l'élément élastiquement déformable comporte un élastomère. Il peut s'agir d'un élément tel qu'un « silent bloc ».

Cet élément s'interpose de préférence entre le fond du logement de l'arbre femelle recevant la douille et l'extrémité de l'arbre mâle engagée dans celle-ci.

L'invention présente un intérêt particulier lorsque ledit roulement arrière est le seul roulement supportant directement l'arbre de la machine électrique.

L'arbre femelle est de préférence celui de la machine électrique, mais en variante il s'agit de celui du réducteur.

La machine électrique est de préférence un moteur, avec de préférence une vitesse de rotation comprise entre 10 000 et 18 000 rpm. Ce moteur peut être un moteur de traction automobile.

De préférence, l'arbre femelle présente une portée de centrage venant en engagement avec l'arbre mâle.

De préférence, l'ensemble comporte un ou plusieurs joints toriques s'interposant radialement entre les arbres mâle et femelle, notamment deux joints toriques espacés axialement s'interposant chacun entre les arbres mâle et femelle. En présence de graisse, le ou les joints toriques présentent l'avantage d'assurer une retenue de celle-ci, permettant de garantir dans la durée la lubrification des reliefs de transmission du couple entre l'arbre mâle et l'arbre femelle.

De préférence, le réducteur comporte un joint d'étanchéité s'appliquant sur l'arbre, en avant de celui de la machine électrique.

L'invention pourra être mieux comprise à la lecture de la description détaillée qui va suivre, d'un exemple de mise en oeuvre de l'invention non limitatif de celle-ci et à l'examen du dessin annexé, sur lequel :
- La figure 1 représente de façon schématique et partielle en coupe axiale un exemple d'ensemble électromécanique selon l'invention,
- La figure 2 représente un détail de la figure 1.

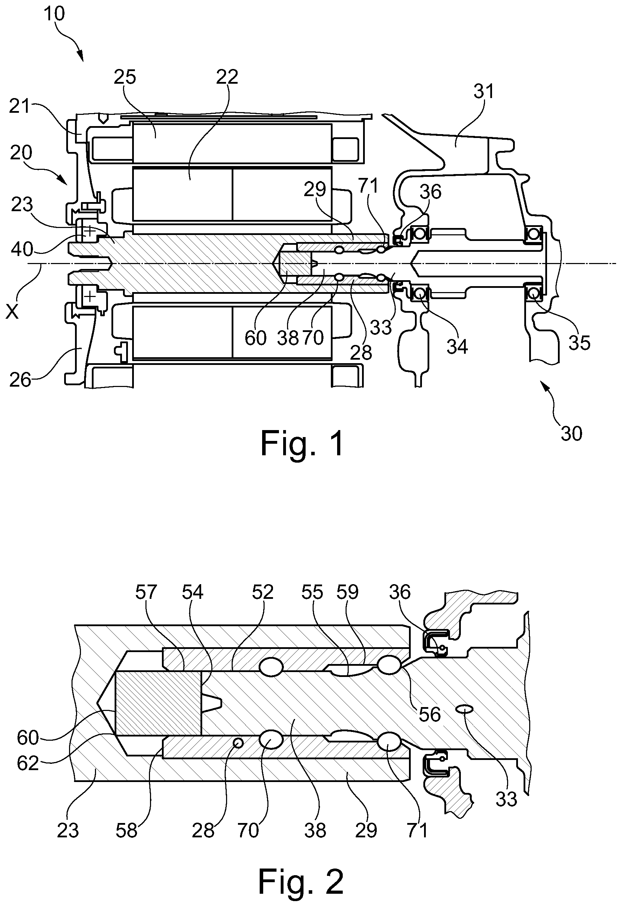

L'ensemble 10 représenté à la figure 1 comporte une machine électrique 20 et un réducteur 30 accouplé à la machine 20.

La machine 20 et le réducteur 30 comportent des carters respectifs 21 et 31 qui sont assemblés ensemble, par exemple par boulonnage.

La machine 20 est dans l'exemple considéré un moteur électrique, et comporte un rotor 22 dont l'arbre 23 tourne en rotation autour d'un axe X.

Le rotor 22 est interne à un stator 25.

La machine 20 peut être un moteur à aimants permanents.

L'arbre 23 est supporté à l'arrière par un roulement 40, porté par un flasque 26 de la machine 20.

Le réducteur 30 comporte un arbre d'entrée 33 qui est guidé à l'avant et à l'arrière par des roulements respectifs 34 et 35.

Les roulements 40, 34 et 35 sont de préférence des roulements à billes.

Un joint à lèvre 36 peut être prévu, comme illustré, pour s'appliquer sur l'arbre 33 en avant du roulement 34. Ce joint 36 peut retenir la graisse du réducteur.

Une liaison mécanique, représentée plus particulièrement à la figure 2, assure la transmission du couple entre les arbres 23 et 33. Cette liaison est dans l'exemple considéré une liaison cannelée, l'arbre 33 comportant une partie mâle cannelée 38 engagée dans une douille 28 frettée dans une partie femelle 29 de l'arbre 23.

Les cannelures 52 de la partie d'arbre 38 s'étendent axialement entre le bout d'arbre 54 et une gorge 55 ménagée en avant d'une portée cylindrique 56.

Les cannelures 57 de la douille 28 s'étendent entre l'extrémité arrière 58 de la douille et une portée cylindrique 59.

Conformément à un aspect de l'invention, un élément élastique 60 s'interpose axialement entre le bout d'arbre 54 et le fond 62 du logement de l'arbre 23 recevant la douille 28.

Cet élément élastiquement déformable 60 est de préférence constitué par un bloc d'un matériau amortisseur, éventuellement renforcé, encore appelé « silent bloc ». Il s'agit préférentiellement d'un bloc d'un élastomère, engagé à l'intérieur de la douille sur par exemple au moins le quart de sa longueur initiale.

L'élément 60 est comprimé selon l'axe X et exerce par réaction une contrainte axiale sur le roulement arrière 40.

Cette précontrainte du roulement 40 est bénéfique en ce qu'elle garantit un meilleur fonctionnement, à savoir un bruit et une usure moindres.

Des joints toriques 70 et 71 sont avantageusement disposés à l'intérieur de la douille 28 pour s'interposer radialement entre l'arbre 38 et la douille 28.

Le joint 70 est disposé dans une gorge annulaire au niveau des cannelures de l'arbre et de la douille, tandis que le joint 71 s'interpose entre les portées 56 et 59.

Les joints 70 et 71 retiennent entre eux la graisse présente au niveau des cannelures, ce qui améliore la tenue dans le temps de la lubrification.

L'invention n'est pas limitée à l'exemple qui vient d'être décrit.

Par exemple, l'élément 60 en élastomère peut être remplacé par tout autre élément élastiquement déformable.

L'arbre femelle de la machine électrique peut être remplacé par un arbre mâle et réciproquement.

Les joints toriques peuvent être supprimés.

L'expression « comportant un » doit être comprise comme étant synonyme de « comprenant au moins un ».

## Revendications

1. Ensemble électromécanique (10) comportant une machine électrique (20) couplée à un réducteur (30), l'un de la machine électrique et du réducteur comportant un arbre mâle et l'autre un arbre femelle dans lequel l'arbre mâle est inséré, la transmission du couple entre les deux étant assurée par coopération de formes, l'arbre de la machine électrique étant supporté à l'arrière par un roulement (40), un élément amortisseur élastiquement déformable (60) étant disposé dans l'arbre femelle de manière à exercer un effort axial sur la portion d'arbre mâle engagée dans l'arbre femelle, cet effort axial tendant à charger axialement ledit roulement arrière (40).

2. Ensemble selon la revendication 1, la transmission du couple étant assurée par des cannelures coopérantes formées sur les arbres mâle et femelle.

3. Ensemble selon la revendication 1 ou 2, l'élément élastiquement déformable (60) comportant un élastomère.

4. Ensemble selon l'une quelconque des revendications précédentes, ledit roulement arrière étant le seul supportant directement l'arbre (23) de la machine électrique.

5. Ensemble selon l'une quelconque des revendications précédentes, l'arbre femelle (23) étant celui de la machine électrique (20).

6. Ensemble selon l'une quelconque des revendications précédentes, la machine électrique (20) étant un moteur, avec de préférence une vitesse de rotation comprise entre 10 000 et 18 000 rpm.

7. Ensemble selon la revendication précédente, le moteur étant un moteur de traction automobile.

8. Ensemble selon l'une quelconque des revendications précédentes, comportant un ou plusieurs joints toriques (70,71) s'interposant radialement entre les arbres mâle et femelle.

9. Ensemble selon la revendication 8, comportant deux joints toriques (70,71) espacés axialement, s'interposant chacun entre les arbres mâle et femelle.

10. Ensemble selon l'une quelconque des revendications précédentes, le réducteur (30) comportant un joint d'étanchéité (36) s'appliquant sur l'arbre (33) du réducteur en avant de celui de la machine électrique.

11. Ensemble selon l'une quelconque des revendications précédentes, le roulement arrière (40) étant un roulement à billes.

## Patentansprüche

1. Elektromechanische Anordnung (10), die eine elektrische Maschine (20) aufweist, die an einen Reduktor (30) gekoppelt ist, wobei eins von der elektrischen Maschine und dem Reduktor eine männliche Welle und das andere eine weibliche Welle, in welche die männliche Welle eingeführt ist, aufweist, wobei die Übertragung des Drehmoments zwischen den zweien durch Formschluss sichergestellt wird, wobei die Welle der elektrischen Maschine hinten von einem Lager (40) getragen wird, wobei ein elastisch verformbares Dämpfungselement (60) in der weiblichen Welle angeordnet ist, um eine axiale Kraft auf den männlichen Wellenabschnitt auszuüben, der mit der weiblichen Welle in Eingriff steht, wobei diese axiale Kraft das hintere Lager (40) axial belasten soll.

2. Anordnung nach Anspruch 1, wobei die Übertragung des Drehmoments durch zusammenwirkende Rillen sichergestellt wird, die auf der männlichen und der weiblichen Welle ausgebildet sind.

3. Anordnung nach Anspruch 1 oder 2, wobei das elastisch verformbare Element (60) ein Elastomer aufweist.

4. Anordnung nach einem der vorhergehenden Ansprüche, wobei das hintere Lager das einzige ist, das die Welle (23) der elektrischen Maschine direkt trägt.

5. Anordnung nach einem der vorhergehenden Ansprüche, wobei die weibliche Welle (23) diejenige der elektrischen Maschine (20) ist.

6. Anordnung nach einem der vorhergehenden Ansprüche, wobei die elektrische Maschine (20) ein Motor ist, vorzugsweise mit einer Drehzahl zwischen 10000 und 18000 U/min.

7. Anordnung nach dem vorhergehenden Anspruch, wobei der Motor ein Automobilantriebsmotor ist.

8. Anordnung nach einem der vorhergehenden Ansprüche, die eine oder mehrere Ringdichtungen(70, 71) aufweist, die radial zwischen der männlichen und der weiblichen Welle angeordnet sind.

9. Anordnung nach Anspruch 8, die zwei Ringdichtungen (70, 71) aufweist, die axial beabstandet sind, die jeweils zwischen der männlichen und der weiblichen Welle angeordnet sind.

10. Anordnung nach einem der vorhergehenden Ansprüche, wobei der Reduktor (30) eine Dichtung (36) aufweist, die an der Welle (33) des Reduktors vor jener der elektrischen Maschine anliegt.

11. Anordnung nach einem der vorhergehenden Ansprüche, wobei das hintere Lager (40) ein Kugellager ist.

## Claims

1. Electromechanical assembly (10) comprising an electrical machine (20) coupled to a reducer (30), either the electrical machine or the reducer comprising a male shaft and the other one comprising a female shaft into which the male shaft is inserted, the transmission of the torque between the two being ensured by form-fitting, the shaft of the electrical machine being supported at the rear by a bearing (40), and an elastically deformable damping element (60) being arranged in the female shaft so as to exert an axial force on the portion of the male shaft engaged in the female shaft, this axial force tending to apply an axial load to said rear bearing (40).

2. Assembly according to Claim 1, the transmission of the torque being ensured by interacting splines formed on the male and female shafts.

3. Assembly according to Claim 1 or 2, the elastically deformable element (60) comprising an elastomer.

4. Assembly according to any one of the preceding claims, said rear bearing being the sole bearing directly supporting the shaft (23) of the electrical machine.

5. Assembly according to any one of the preceding claims, the female shaft (23) being the shaft of the electrical machine (20).

6. Assembly according to any one of the preceding claims, the electrical machine (20) being a motor with, preferably, a speed of rotation of between 10 000 and 18 000 rpm.

7. Assembly according to the preceding claim, the motor being an automobile traction motor.

8. Assembly according to any one of the preceding claims, comprising one or more O-rings (70, 71) interposed radially between the male and female shafts.

9. Assembly according to Claim 8, comprising two axially spaced O-rings (70, 71), each interposed between the male and female shafts.

10. Assembly according to any one of the preceding claims, the reducer (30) comprising a seal (36) applied on the shaft (33) of the reducer forward of the shaft of the electrical machine.

11. Assembly according to any one of the preceding claims, the rear bearing (40) being a ball bearing.
